# EUROPEAN PATENT SPECIFICATION

(11) **EP 4 133 018 B1**
(45) Date of publication and mention of the grant of the patent: **21.01.2026**
(21) Application number: 21716211.4
(22) Date of filing: 06.04.2021
(51) Int. Cl.: C09D 143/04, C09D 171/02, C09D 175/04, C08L 43/04, C08L 71/02, C08G 18/28, C08G 18/76, C08G 18/80, C09J 175/08, C08G 18/10, C08G 18/24, C08G 18/48, C08G 18/75, C09D 175/08, C08G 65/336

(54) **CURABLE COMPOSITIONS BASED ON SILANE-FUNCTIONAL POLYMERS OVERPAINTABLE**
HÄRTBARE ZUSAMMENSETZUNGEN AUF DER BASIS VON SILANFUNKTIONELLEN POLYMEREN MIT ÜBERLACKIERBARKEIT
COMPOSITIONS DURCISSABLES À BASE DE POLYMÈRES À FONCTION SILANE QUI PEUVENT ÊTRE REPEINTS

(30) Priority: 08.04.2020 EP 20168728
(43) Date of publication of application: 15.02.2023
(73) Proprietor: Sika Technology AG, 6340 Baar (CH)
(72) Inventor: RUTZ, Daniele, 8049 Zürich (CH); DESMORTREUX, Charlene, 8004 Zürich (CH)
(74) Representative: Sika Patent Attorneys
(86) International application number: PCT/EP2021/058909
(87) International publication number: WO 2021/204783

(56) References cited:
- EP-A1- 2 338 938
- EP-A1- 2 388 297
- EP-A1- 3 115 419
- US-A- 4 826 904

## Description

### Technical field

The invention relates to curable compositions based on organic silane-functional polymers, their use as adhesives, sealants, fillers, or coatings and a process for repairing. The invention is set out in the appended set of claims.

### State of the art

Curable compositions based on polymers containing reactive silane groups play an important role in many industrial or construction applications, for example as adhesives, sealants or coatings. Polymers containing reactive silane groups are either polydiorganosiloxanes, which are commonly referred to as "silicones" or "silicone rubbers", ororganic polymers containing reactive silane groups, which are also referred to as "silane-functional polymers", "silane-modified polymers" (SMP) or "silane-terminated polymers" (STP). Compositions containing these polymers are cured via crosslinking reactions of the reactive silane groups on the polymers, which hydrolyze under the influence of moisture, condense with one another as silanol groups and thus form siloxane bonds.

Due to their versatile mechanical properties in the cured state and excellent adhesion on various substrates, compositions based on organic silane-terminated polymers are also used widely in repair applications. Their tesile strength, elasticity, Shore A hardness and many relevant other properties can be adjusted within wide ranges by appropriate formulation of the compositions, and their adhesive properties often work well without the need for extensive pre-treatment of the substrate. Thus, in demanding repair operations, such as car body restorations after crashes, such compositions are highly suitable, since they form a durable adhesive bond on painted or raw metals and other materials used in automotive manufacturing.

One problem that compositions based on silane-functional polymers have is a somewhat limited overpaintability, especially with hard, hydrophobic paints, varnishes or lacquers that are nowadays used for example as topcoats in automotive paint shops.

After repairing a damaged painted object, such as a damaged car body, the same paint needs the be re-applied on the repaired section of the object that was applied on the rest of the object such that the repaired damage becomes invisible.

However, with modern durable paints, varnishes and lacquers, overpaintability is a problem with compositions based on silane-functional polymers. With common compositions based on silane-functional polymers, the paint, varnish or lacquer tends to flake off after a while, especially when scratched or otherwise damaged, leaving visible paint defects that are not only unpleasant to look at, but also may accelerate rusting of the painted substrate, if it is metallic. Furthermore, it was observed that the constituents of common compositions based on silane-functional polymers, such as plasticizers, often somehow react with or migrate into the dried paint applied thereon, which leads to visible discolorations in the portions of dried paint, varnish or lacquer that cover the cured compostions based on silane-functional polymers.

EP 2 338 938 A1 discloses a curable composition for a sealant, adhesive or coating based on a silyl functional polymer, e.g. a polyether, the composition further comprising dimethyl adipate, an alkoxysilane coupling agent and a curing catalyst for the alkoxysilane groups. Examples 1-15 of D1 comprise dimethyl adipate (DMA) as plasticizer. Overpaintability is not assessed in this document.

EP 2 388 297 A1 discloses a curable composition for a sealant, adhesive or coating based on a silyl functional polymer, e.g. a polyether or a polyurethane (SPUR), and containing dimethyl glutarate or dimethyl adipate, an alkoxysilane coupling agent and a curing catalyst for alkoxysilane groups.

In a very similar fashion, EP 3 1 15 419 A1 discloses a curable composition for a sealant, adhesive or paint based on a silyl functional polymer, e.g. polyether, and containing dimethyl glutarate or dimethyl adipate, alkoxysilane coupling agent and a tin-based curing catalyst for alkoxysilane groups. Both these documents do not adress overpaintability and the example compositions disclosed contain dimethyl adipate.

US 4826 904 A discloses a coating composition containing silyl-modified polyacrylate and mixture of dimethyl succinate, dimethyl glutarate and dimethyl adipate. In example 1 of this document, a clear coating composition containing among other ingredients 20 wt.-% of a mixture ol dimethyt succinate, dimethyt glutarate and dimethyl adipate (weight ratio of dimethyl succinate : dimethyl glutarate : dimethyl adipate = 16.5 : 66 : 17, denoted as "DBE") is disclosed. Said coating composition is used for re-finish and shows improved adhesion to (under)coatings when cured. Overpaintability is, however, not assessed.

### Summary of the invention

It is therefore an object of the present invention to provide a curable composition based on organic polymers containing reactive silane groups that can be overpainted easily and durably such that the paint, varnish or lacquer applied thereon does not flake off or show signs of discoloration. This also applies for especially hydrophobic and demanding paints, varnishes or lacquers with high hardness that are used in automotive paint shops nowadays.

The present invention achieves these objects with the features of independent claim 1.

The inclusion of between 1.0 wt.-% and 25.0 wt.-%, preferably between 2.0 wt.- % and 20 wt.-%, in particular between 2.5 wt.-% and 10 wt.-%, based on the total composition, of dimethyl or diethyl esters of aliphatic C3 to C5 dicarboxylic acids, characterized in that the dimethyl or diethyl esters of aliphatic C3 to C5 dicarboxylic acids comprise at least 90 wt.-% of dimethyl glutarate, based in the total amount of esters of aliphatic C3 to C5 dicarboxylic acids contained in the composition, in a moisture-curable composition based on organic polymers containing reactive silane groups and at least one curing catalyst for alkoxysilane groups surprisingly enables a significantly improved overpaintability, in particular with hydrophobic and demanding paints, varnishes or lacquers with high hardness that are used in automotive paint shops nowadays.

Further aspects of the invention are the subject of further independent claims. Particularly preferred embodiments of the invention are the subject of the dependent claims.

### Ways of executing the invention

The present invention relates in a first aspect to a a moisture-curable composition, comprising
- at least one organic polymer **P** containing reactive silane groups;
- between 1.0 wt.-% and 25.0 wt.-%, preferably between 2.0 wt.-% and 20 wt.-%, in particular between 2.5 wt.-% and 10 wt.-%, based on the total composition, of dimethyl or diethyl esters of aliphatic C3 to C5 dicarboxylic acids; and
- at least one curing catalyst for alkoxysilane groups,
characterized in that the dimethyl or diethyl esters of aliphatic C3 to C5 dicarboxylic acids comprise at least 90 wt.-% of dimethyl glutarate, based in the total amount of esters of aliphatic C3 to C5 dicarboxylic acids contained in the composition.

In the present document, the term "reactive silane group" refers to a silyl group that is bonded to an organic radical or to a polyorganosiloxane radical and has one to three, especially two or three, hydrolyzable substituents or hydroxyl groups on the silicon atom. Particularly useful hydrolyzable substituents are alkoxy groups. These silane groups are also referred to as "alkoxysilane groups". Reactive silane groups may also be in partly or fully hydrolyzed form, for example as silanols.

"Hydroxysilane", "isocyanatosilane", "aminosilane" and "mercaptosilane" refer respectively to organoalkoxysilanes having one or more hydroxyl, isocyanato, amino or mercapto groups on the organic radical in addition to the silane group.

"Aminofunctional compound" refers to a compound that contains an amino group.

"Primary amino group" refers to an NH₂ group that is bonded to an organic radical, and "secondary amino group" refers to an NH group that is bonded to two organic radicals which may also together be part of a ring, and "tertiary amino group" refers to an N group that is bonded to three organic radicals, two or three of which together may also be part of one or more rings. Accordingly, "primary aminosilanes" are aminosilanes comprising a primary amino group and "secondary aminosilanes" are aminosilanes comprising a secondary amino group. The latter also encompasses compounds having both a primary and a secondary amino group.

"Polyoxyalkylene radical" refers to a linear or branched hydrocarbyl radical which contains ether groups and contains more than two repeat units of the (OR) type in succession, where R is a linear or branched alkylene radical, as for example from the polyaddition of ethylene oxide or 1,2-propylene oxide onto starter molecules having two active hydrogen atoms.

Substance names beginning with "poly", such as polyol or polyisocyanate, refer to substances containing, in a formal sense, two or more of the functional groups that occur in their name per molecule.

The term "organic polymer" encompasses a collective of macromolecules that are chemically homogeneous but differ in relation to degree of polymerization, molar mass and chain length, which has been prepared by a poly reaction (polymerization, polyaddition, polycondensation) and has a majority of carbon atoms in the polymer backbone, and reaction products of such a collective of macromolecules. Polymers having a polyorganosiloxane backbone (commonly referred to as "silicones") are not organic polymers in the context of the present document.

The term "polyether containing reactive silane groups" also encompasses organic polymers which contain silane groups and which, in addition to polyether units, may also contain urethane groups, urea groups or thiourethane groups. Such polyethers containing reactive silane groups may also be referred to as "polyurethanes containing reactive silane groups".

"Molecular weight" is understood in the present document to mean the molar mass (in grams per mole) of a molecule or part of a molecule, also referred to as "radical". The term "radical" is used in this document in a formal sense, meaning a molecular rest bound to an atom by a covalent bond, while the bond is formally "cut" to describe the molecular rest attached to it. "Average molecular weight" is understood to mean the number-average Mₙ of an oligomeric or polymeric mixture of molecules or radicals, which is typically determined by means of gel permeation chromatography (GPC) against polystyrene as standard.

"Weight percent" or "percentage by weight", and its abbreviation "wt.-%" refer to the weight percentage of a certain compound in a total composition, if not otherwise defined. The terms "weight" and "mass" are used interchangeably in this document and refer to the mass as a property of a physical body and commonly measured in kilograms (kg).

"Storage-stable" or "storable" refers to a substance or composition when it can be stored at room temperature in a suitable container over a prolonged period, typically at least 3 months up to 6 months or more, without any change in its application or use properties, especially in the viscosity and crosslinking rate, to a degree of relevance for the use thereof as a result of the storage.

"Room temperature" refers to a temperature of about 23°C.

All industrial standards and norms cited in this document refer to the respective edition in force on the time of filing of the first application of this invention, if not otherwise defined.

First of all, required in the composition according to the present invention is at least one organic polymer **P** containing reactive silane groups.

In general, it is preferred that the amount of polymer **P** in the compostion is between 10 and 60 wt.-%, preferably between 10 and 40 w.-%, more preferably between 15 and 30 wt.-%, based on the total composition. This range allows for good mechanical properties without making the composition too expensive.

The organic polymer **P** containing reactive silane groups is in particular a polyurethane, polyolefin, polyester, polycarbonate, polyamide, poly(meth)acrylate or polyether or a mixed form of these polymers, each of which bears one or preferably more than one silane group. The silane groups may be in pendant positions in the chain or in terminal positions and are bonded to the organic polymer via a carbon atom.

More preferably, the organic polymer **P** containing reactive silane groups is a polyolefin containing reactive silane groups or a polyurethane containing reactive silane groups or a polyether containing reactive silane groups or a mixed form of these polymers.

Most preferably, the organic polymer containing reactive silane groups is a polyether containing reactive silane groups.

The silane groups present in the organic polymer containing reactive silane groups are preferably alkoxysilane groups, especially alkoxysilane groups of the formula (VII) 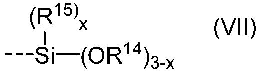 where
R¹⁴ is a linear or branched, monovalent hydrocarbyl radical having 1 to 5 carbon atoms, especially methyl or ethyl or isopropyl;
R¹⁵ is a linear or branched, monovalent hydrocarbyl radical having 1 to 8 carbon atoms, especially methyl or ethyl; and
x is a value of 0 or 1 or 2, preferably 0 or 1, especially 0.

More preferably R¹⁴ is methyl or ethyl.

For particular applications, the R¹⁴ radical is preferably an ethyl group, since, in this case, ecologically and toxicologically harmless ethanol is released in the course of curing of the composition.

Particular preference is given to trimethoxysilane groups, dimethoxymethyl-silane groups or triethoxysilane groups.

In this context, methoxysilane groups have the advantage that they are particularly reactive, and ethoxysilane groups have the advantage that they are toxicologically advantageous and particularly storage-stable.

The organic polymer containing reactive silane groups has an average of preferably 1.3 to 4, especially 1.5 to 3, more preferably 1.7 to 2.8, silane groups per molecule. The silane groups are preferably terminal.

The organic polymer containing reactive silane groups preferably has a average molecular weight, determined by means of GPC against a polystyrene standard, in the range from 1'000 to 30'000 g/mol, especially from 2'000 to 20'000 g/mol. The organic polymer containing reactive silane groups preferably has a silane equivalent weight of 300 to 25'000 g/eq, especially of 500 to 15'000 g/eq.

The organic polymer containing reactive silane groups may be solid or liquid at room temperature. It is preferably liquid at room temperature.

Most preferably, the organic polymer containing reactive silane groups is a polymer containing reactive silane groups that is liquid at room temperature, where the silane groups are especially dialkoxysilane groups and/or trialkoxysilane groups, more preferably trimethoxysilane groups or triethoxysilane groups.

Processes for preparing organic polymers containing reactive silane groups are known to the person skilled in the art.

In a preferred process, organic polymers containing reactive silane groups are obtainable from the reaction of organic polymers containing allyl groups with hydrosilanes, optionally with chain extension using, for example, diisocyanates. In a further preferred process, polyethers containing reactive silane groups are obtainable from the copolymerization of alkylene oxides and epoxysilanes, optionally with chain extension using, for example, diisocyanates.

In a further preferred process, organic polymers containing reactive silane groups are obtainable from the reaction of organic polyols with isocyanatosilanes, optionally with chain extension using diisocyanates.

In a further preferred process, polyethers containing reactive silane groups are obtainable from the reaction of organic polymers containing isocyanate groups, especially NCO-terminated urethane polymers from the reaction of polyols with a superstoichiometric amount of polyisocyanates, with aminosilanes, hydroxysilanes or mercaptosilanes. Polyethers containing reactive silane groups from this process are particularly preferred. This process enables the use of a multitude of inexpensive starting materials of good commercial availability, by means of which it is possible to obtain different polymer properties, for example high extensibility, high strength, low modulus of elasticity, low glass transition point or high weathering resistance.

More preferably, the organic polymer containing reactive silane groups is obtainable from the reaction of NCO-terminated urethane polyethers with aminosilanes or hydroxysilanes. Suitable NCO-terminated urethane polymers are obtainable from the reaction of polyols, especially polyether polyols, in particular polyoxyalkylenediols or polyoxyalkylenetriols, preferably polyoxypropylenediols or polyoxypropylenetriols, with a superstoichiometric amount of polyisocyanates, especially diisocyanates. Also other polyols, such as poly(meth)acrylate polyols, polyhydrocarbon polyols, in particular polybutadiene polyols, polyhdroxy functional fats or oils, polycarbonate polyols, polyester polyols and polyhydroxy functional acrylonitrilie/butadiene copolymers are suitable. Furthermore, small amounts of low molecular weight dihydric or polyhydric alcohols, such as diols, glycols, and sugar alcohols may be used as additives.

Preferably, the reaction between the polyisocyanate and the polyol is conducted with exclusion of moisture at a temperature of 50°C to 160°C, optionally in the presence of suitable catalysts, with metered addition of the polyisocyanate in such a way that the isocyanate groups thereof are present in a stoichiometric excess in relation to the hydroxyl groups of the polyol. More particularly, the excess of polyisocyanate is chosen such that a content of free isocyanate groups of 0.1% to 5% by weight, preferably 0.2% to 4% by weight, more preferably 0.3% to 3% by weight, based on the overall polymer, remains in the resulting urethane polymer after the reaction of all hydroxyl groups. Preferred diisocyanates are selected from the group consisting of hexamethylene 1,6-diisocyanate (HDI), 1-isocyanato-3,3,5-trimethyl-5-isocyanatomethylcyclohexane (= isophorone diisocyanate or IPDI), tolylene 2,4- and 2,6-diisocyanate and any desired mixtures of these isomers (TDI) and diphenylmethane 4,4'-, 2,4'- and 2,2'-diisocyanate and any desired mixtures of these isomers (MDI). Particular preference is given to MDI, IPDI or TDI. Most preferred is IPDI in some embodiments. In this way, polyethers containing reactive silane groups with particularly good lightfastness are obtained.

Especially suitable as polyether polyols are polyoxyalkylenediols or polyoxyalkylenetriols having a degree of unsaturation lower than 0.02 meq/g, especially lower than 0.01 meq/g, and a mean molecular weight in the range from 400 to 25'000 g/mol, especially 1000 to 20'000 g/mol.

As well as polyether polyols, it is also possible to use portions of other polyols, especially polyacrylate polyols, and low molecular weight diols or triols.

Suitable aminosilanes for the reaction with an NCO-terminated urethane polyether are primary and secondary aminosilanes. Preference is given to 3-aminopropyltrimethoxysilane, 3-aminopropyldimethoxymethylsilane, 4-aminobutyltrimethoxysilane, 4-amino-3-methylbutyltrimethoxysilane, 4-amino-3,3-dimethylbutyltrimethoxysilane, N-butyl-3-aminopropyltrimethoxysilane, N-phenyl-3-aminopropyltrimethoxysilane, adducts formed from primary aminosilanes such as 3-aminopropyltrimethoxysilane, 3-aminopropyldimethoxymethylsilane or N-(2-aminoethyl)-3-aminopropyltrimethoxysilane and Michael acceptors such as acrylonitrile, (meth)acrylic esters, (meth)acrylamides, maleic or fumaric diesters, citraconic diesters or itaconic diesters, especially dimethyl or diethyl N-(3-trimethoxysilylpropyl)aminosuccinate. Likewise suitable are analogs of the aminosilanes mentioned with ethoxy or isopropoxy groups in place of the methoxy groups on the silicon.

Suitable hydroxysilanes for the reaction with an NCO-terminated urethane polyether are especially obtainable from the addition of aminosilanes onto lactones or onto cyclic carbonates or onto lactides.

Aminosilanes suitable for the purpose are especially 3-aminopropyltrimethoxysilane, 3-aminopropyltriethoxysilane, 4-aminobutyltrimethoxysilane, 4-aminobutyltriethoxysilane, 4-amino-3-methylbutyltrimethoxysilane, 4-amino-3-methylbutyltriethoxysilane, 4-amino-3,3-dimethylbutyltrimethoxysilane, 4-amino-3,3-dimethylbutyltriethoxysilane, 2-aminoethyltrimethoxysilane or 2-aminoethyltriethoxysilane. Particular preference is given to 3-aminopropyltrimethoxysilane, 3-aminopropyltriethoxysilane, 4-amino-3,3-dimethylbutyl-trimethoxysilane or 4-amino-3,3-dimethylbutyltriethoxysilane.

Suitable lactones are especially γ-valerolactone, γ-octalactone, δ-decalactone, and ε-decalactone, especially γ-valerolactone.

Suitable cyclic carbonates are especially 4,5-dimethyl-1,3-dioxolan-2-one, 4,4-dimethyl-1,3-dioxolan-2-one, 4-ethyl-1,3-dioxolan-2-one, 4-methyl-1,3-dioxolan-2-one or 4-(phenoxymethyl)-1,3-dioxolan-2-one.

Suitable lactides are especially 1,4-dioxane-2,5-dione (lactide formed from 2-hydroxyacetic acid, also called "glycolide"), 3,6-dimethyl-1,4-dioxane-2,5-dione (lactide formed from lactic acid, also called "lactide") and 3,6-diphenyl-1,4-dioxane-2,5-dione (lactide formed from mandelic acid).

Preferred hydroxysilanes which are obtained in this way are N-(3-triethoxysilylpropyl)-2-hydroxypropanamide, N-(3-trimethoxysilylpropyl)-2-hydroxypropanamide, N-(3-triethoxysilylpropyl)-4-hydroxypentanamide, N-(3-triethoxysilylpropyl)-4-hydroxyoctanamide, N-(3-triethoxysilylpropyl)-5-hydroxydecanamide and N-(3-triethoxysilylpropyl)-2-hydroxypropyl carbamate.

In addition, suitable hydroxysilanes are also obtainable from the addition of aminosilanes onto epoxides or from the addition of amines onto epoxysilanes. Preferred hydroxysilanes which are obtained in this way are 2-morpholino-4(5)-(2-trimethoxysilylethyl)cyclohexan-1-ol, 2-morpholino-4(5)-(2-triethoxysilyl-ethyl)cyclohexan-1-ol or 1-morpholino-3-(3-(triethoxysilyl)propoxy)propan-2-ol.

Further suitable polyethers containing reactive silane groups are commercially available products, especially the following: MS Polymer^{™} (from Kaneka Corp.; especially the S203H, S303H, S227, S810, MA903 and S943 products); MS Polymer^{™} or Silyl^{™} (from Kaneka Corp.; especially the SAT010, SAT030, SAT200, SAX350, SAX400, SAX725, MAX450, MAX951 products); Excestar^{®} (from Asahi Glass Co. Ltd.; especially the S2410, S2420, S3430, S3630 products); SPUR+* (from Momentive Performance Materials; especially the 1010LM, 1015LM, 1050MM products); Vorasil^{™} (from Dow Chemical Co.; especially the 602 and 604 products); Desmoseal^{®} (from Bayer MaterialScience AG; especially the S XP 2458, S XP 2636, S XP 2749, S XP 2774 and S XP 2821 products), TEGOPAC^{®} (from Evonik Industries AG; especially the Seal 100, Bond 150, Bond 250 products), Polymer ST (from Hanse Chemie AG/Evonik Industries AG, especially the 47, 48, 61, 61LV, 77, 80, 81 products); Geniosil^{®} STP (from Wacker Chemie AG; especially the E10, E15, E30, E35, WP1, and WP2 products).

Particularly preferred organic polymers containing reactive silane groups have end groups of the formula (VIII) 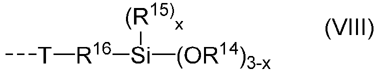 where
R¹⁶ is a linear or branched divalent hydrocarbyl radical which has 1 to 12 carbon atoms and optionally has cyclic and/or aromatic moieties and optionally one or more heteroatoms, especially one or more nitrogen atoms;
T is a divalent radical selected from -O-, -S-, -N(R¹⁷)-, -O-CO-N(R¹⁷)-, -N(R¹⁷)-CO-O- and -N(R¹⁷)-CO-N(R¹⁷)-,
   where R¹⁷ is a hydrogen radical or a linear or branched hydrocarbyl radical which has 1 to 20 carbon atoms and optionally has cyclic moieties, and which optionally has an alkoxysilane, ether or carboxylic ester group; and
R¹⁴, R¹⁵ and x have the definitions already given.

Preferably, R¹⁶ is 1,3-propylene or 1,4-butylene, where butylene may be substituted by one or two methyl groups.

More preferably, R¹⁶ is 1,3-propylene.

In some preferred embodiments of the moisture-curable composition according to the present invention, polymer **P** contains methoxysilyl groups. Methoxysilyl groups have the advantage that they are especially reactive and the composition thus cures fast and/or with low catalyst loadings.

In other preferred embodiments, the reactive silane groups are ethoxysilane, propoxysilane, or higher alkoxysilane groups, preferably ethoxysilane groups. These embodiments lead to decreased methanol levels in the VOC during and after curing of the composition.

In the same or other preferred embodiments of the moisture-curable composition according to the present invention, the moisture-curable composition does not contain any compounds that split off methanol when hydrolyzed. Instead, it is preferred that only ethanol-splitting compounds (i.e. ethoxysilan-functional compounds) are comprised in the composition. This has the advantage that the composition is especially non-hazardous but still shows adequate curing behavior.

The moisture-cureable composition according to the present invention comprises between 1.0 wt.-% and 25.0 wt.-%, preferably between 2.0 wt.-% and 20 wt.-%, in particular between 2.5 wt.-% and 10 wt.-%, based on the total composition, of dimethyl or diethyl esters of aliphatic C3 to C5 dicarboxylic acids, characterized in that the dimethyl or diethyl esters of aliphatic C3 to C5 dicarboxylic acids comprise at least 90 wt.-% of dimethyl glutarate, based in the total amount of esters of aliphatic C3 to C5 dicarboxylic acids contained in the composition.

It was surprisingly found that dimethyl or diethyl esters of aliphatic C3 to C5 dicarboxylic acids, in particular dimethyl glutarate, lead to the inventive effect of enhanced overpaintability of compositions according to the present invention.

Dimethyl or diethyl esters of aliphatic C3 to C5 dicarboxylic acids are commercially available, either in pure form or, more commonly, as so-called dibasic ester mixtures. Most commonly, they are dimethyl esters, but other esters such as diethyl esters or esters of higher alcohols are also available. They typically contain between 0.5 and 30 wt-% dimethyl succinate, between 50 and 99 wt.-% dimethyl glutarate, and between 0.5 and 25 wt.-% dimethyl adipate, based on the total mixture, or esters of other alcohols such as ethanol instead of methanol.

For the present invention, only diesters of methanol or ethanol are suitable. Higher alcohol esters such as isobutanol esters are not suitable in compositions according to the present invention, since they lead to deactivation and storage stability issues.

Most preferred are dimethyl esters. They enable the highest composition stability and the best overpaintability effect.

The most preferred dimethyl ester is dimethyl glutarate, also called pentanedioic acid dimethyl ester.

The mixture of dimethyl or diethyl esters of aliphatic C3 to C5 dicarboxylic acids used in compositions according to the present invention contains at least 90 wt.-%, most preferably at least 95 wt.-%, based on the total mixture, of dimethyl glutarate.

In preferred embodiments, the curable composition contains less than 5 wt.-% of other diesters of aliphatic dicarboxylic acids, based on the total amount of diesters of aliphatic dicarboxylic acids including dimethyl glutarate contained in the composition.

A preferred source of dimethyl glutarate for the compositions according to the present invention are dibasic esters with high dimethyl glutarate content. For example, a mixture of dimethyl succinate, dimethyl glutarate and dimethyl adipate, containing 99 wt.-% dimethyl glutarate (Estasol^{®} DMG, from Chemoxy) Estasol DMG is highly suitable for the purpose of the present invention.

The moisture-curable composition furthermore preferably contains between 0.1 wt.-% and 5 wt.-%, preferably between 0.25 wt.-% and 2.5 wt.-%, based on the total compositions, of an organosilane **OS** of formula (I),

R^{a}-Si(OCH₃)₃ (I)

wherein
R^{a} is an aliphatic, cycloyliphatic or aromatic C4 to C12 alkyl residue, preferably a C6 to C10 alkyl residue, that optionally contains ether oxygen oder secondary amino groups.

The use of an organosilane **OS** in compositions according to the present invention has the advantage that an especially good overpaintability can be achieved that even exceeds the overpaintability of compositions where dimethyl or diethyl esters of aliphatic C3 to C5 dicarboxylic acids, in particular dimethyl glutarate, are/is used alone.

Preferred organosilanes **OS** include n-butyltrimethoxysilane, isobutyltrimethoxysilane, phenyltrimethoxysilane, octyltrimethoxysilane, and N-(n-butyl)-3-aminopropyltrimethoxysilane.

In especially preferred embodiments, said organosilane **OS** is N-(n-butyl)-3-aminopropyltrimethoxysilane, octyltrimethoxysilane, phenyltrimethoxysilane or any mixture of these silanes.

Preferably, the composition comprises between 2.5 wt.-% and 10 wt.-% of dimethyl glutarate and between 0.25 wt.-% and 2.5 wt.-% of said organosilane **OS,** in particular octyltrimethoxysilane, and/or N-(n-butyl)-3-aminopropyltrimethoxysilane.

The moisture-curable composition according to the present invention may preferably furthermore comprise between 0.5 and 2.5 wt.-%, based on the total composition, of organosilanes that are not according to formula (I) above.

The inventive composition may comprise between 0 and 2.5 wt.-%, based on the total composition, of at least one monomeric or oligomeric organosilane. Preferably, the inventive composition comprises between 0.5 and 2 wt.-%, based on the total composition, of the monomeric or oligomeric such further organosilane.

One advantage of using oligomeric alkoxysilanes is that lower VOC levels can be achieved when employing them in greater amounts compared to purely monomeric silanes.

Examples of monomeric aminofunctional alkoxysilanes that are suitable are shown in formula (II), 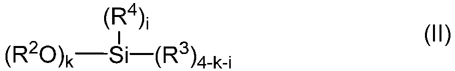 where
R² is a monovalent alkyl radical having 1 to 6 carbon atoms, preferably 1 or 2 carbon atoms, most preferably a methyl radical;
R³ is a monovalent linear, cyclic, or branched alkyl or aralkyl radical having 1 to 20 carbon atoms and optionally comprising heteroatoms selected from O, N, and S;
R⁴ is is a monovalent linear, branched, or cyclic alkyl or arakyl radical having 1 to 12 carbon atoms, preferably 1 to 8 carbon atoms, most preferably a methyl radical;
R⁵ is a monovalent linear, branched, or cyclic alkyl or arakyl radical having 1 to 12 carbon atoms, preferably 1 to 6 carbon atoms;
index i is an integer with a value of 0 or 1, preferably 0;
index k is an integer with a value of 2 or 3, with the provisio that if i = 1 then k = 2;
index p is an integer with a value of 1 to 6.

Suitable oligomeric silanes are shown in formula (III) and (IV), where formula (III) shows linear oligomers and formula (IV) shows cyclic oligomers. It is possible to also use branched oligomers, at least in portions of a mixture of oligomers.

Suitable linear oligomers for use as oligomeric silanes are shown in formula (III), 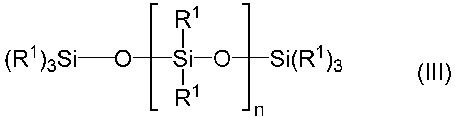 where
R¹ independently stands for
   - an alkoxy radical with 1 to 6 carbon atoms, preferably 1 or two carbon atoms, more preferably a methoxy radical
   - an R³ as defined above, or
   - an R⁴ as defined above; and
index n is an integer with a value of 1 to 30.

Suitable cyclic oligomers for use as oligomeric silanes are shown in formula (IV), 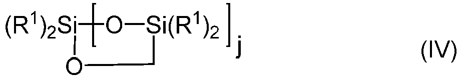 where
R¹ has the same meaning as above; and
Index j is an integer with a value of 3 to 30.

Preferred monomeric or oligomeric aminofunctional alkoxysilanes include 3-aminopropyltrimethoxysilane, 3-aminopropyldimethoxymethyl-silane, N-(2-aminoethyl)-3-aminopropyltrimethoxysilane, N-(2-aminoethyl)-3-aminopropyldimethoxymethylsilane, N-(2-aminoethyl)-N'-[3-(trimethoxysilyl)-propyl]ethylenediamine and oligomers obtained from the condensation of the mentioned aminosilanes, optionally oligomerized together with alkylalkoxysilanes, in particular methyltrimethoxysilane, ethyltrimethoxysilane, propyltrimethoxysilane, vinyltrimethoxysilane, n-butyltrimethoxysilane, isobutyltrimethoxysilane, phenyltrimethoxysilane, and octyltrimethoxysilane. Also preferred are monomeric or oligomeric or the analogs thereof with ethoxy in place of methoxy groups.

These silanes, when used in the compositions according to the present invention, have the advantage that they both improve adhesion of the composition on various substrates and improve the curing rate of the composition, without being detrimental to the mechanical properties.

Furthermore, preferred as organosilanes not according to formula (I) are epoxy- or thiol-functional organosilanes. These silanes improve adhesion on various subtrates.

The composition furthermore may comprise between 0 and 40 wt.-%, preferably between 5 and 25 wt.-%, more preferably between 7 and 15 wt.-%, based on the total composition, of at least one plasticizer.

The plasticizer may be any of the plasticizers commonly used in compositions based on silane-functional polymers. These include, for example, carboxylic esters such as phthalates, especially dioctyl phthalate, bis(2-ethylhexyl) phthalate, bis(3-propylheptyl) phthalate, diisononyl phthalate or diisodecyl phthalate, diesters of ortho-cyclohexane-dicarboxylic acid, especially diisononyl 1,2-cyclohexanedicarboxylate, adipates, especially dioctyl adipate, bis(2-ethylhexyl) adipate, azelates, especially bis(2-ethylhexyl) azelate, sebacates, especially bis(2-ethylhexyl) sebacate or diisononyl sebacate, glycol ethers, glycol esters, organic phosphoric or sulfonic esters, sulfonamides, polybutenes, or fatty acid methyl or ethyl esters derived from natural fats or oils, also called "biodiesel".

Furthermore suitable are polymeric plasticizers. These have the advantage of lower migration tendency into surrounding areas and lower contribution to VOC levels.

The term "polymeric plasticizer" herein means a polymeric additive that is liquid at room temperature and contains no hydrolyzable silane groups. In contrast to traditional plasticizers, such as phthalates, the polymeric plasticizers generally have a higher molecular weight.

Preferably, the polymeric plasticizer has an average molecular weight Mₙ of 500 to 12'000 g/mol, in particular 1'000 to 10'000 g/mol, more preferably 2'500 to 5'000 g/mol.

Suitable polymeric plasticizers include polyols, such as those suitable for the production of the organic polymers **P** mentioned there, as long as they are liduid at room temperature. Preferred polyols suitable as polymeric plasticizers include polyether polyols, polyester polyols, polyhydrocarbon polyols, polybutadiene polyols, and poly(meth)acrylate polyols. Particularly preferred are polyether polyols, especially those with an average molecular weight of Mₙ of 500 to 12'000 g/mol, especially 1'000 to 10'000 g/mol, more preferably 2'500 to 5'000 g/mol.

Such polyols are especially suitable in combination with organic polymers **P.** Major advantages of using polyether polyols as polymeric plasticizers are an especially fast adhesion build-up and especially good adhesion properties. Especially preferred embodiments of polymeric plasticizers have end-capped hydroxyl groups, for example converted to ester groups.

The composition furthermore comprises a curing catalyst for the curing of alkoxysilanes, especially for the crosslinking reactions of polymers containing silane groups. Suitable catalysts are especially netalorganic compounds and/or basic nitrogen or phosphorus compounds.

Suitable metalorganic compounds are especially compounds of tin, titanium, zirconium, aluminum or zinc, especially diorganotin(IV) compounds such as, in particular, dibutyltin(IV) diacetate, dibutyltin(IV) dilaurate, dibutyltin(IV) dineodecanoate or dibutyltin(IV) bis(acetylacetonate) and dioctyltin(IV) dilaurate, and also titanium(IV) or zirconium(IV) or aluminum(III) or zinc(II) complexes, especially with alkoxy, carboxylate, 1,3-diketonate, 1,3-ketoesterate or 1,3-ketoamidate ligands.

Suitable basic nitrogen or phosphorus compounds are especially imidazoles, pyridines, phosphazene bases or preferably amines, hexahydrotriazines, biguanides, guanidines or further amidines.

In addition, the composition may comprise, as cocatalyst, an acid, especially a carboxylic acid. Preference is given to aliphatic carboxylic acids such as formic acid, lauric acid, stearic acid, isostearic acid, oleic acid, 2-ethyl-2,5-dimethylcaproic acid, 2-ethylhexanoic acid, neodecanoic acid, fatty acid mixtures from the hydrolysis of natural fats and oils or di- and polycarboxylic acids, especially poly(meth)acrylic acids.

In a preferred embodiment, the composition is essentially free of organotin compounds. Organotin-free compositions are advantageous in terms of protection of health and protection of the environment. More particularly, the tin content of the curable composition is in some preferred embodiments less than 0.1% by weight, especially less than 0.05% by weight. These embodiments are especially beneficial to consumers due to low levels of potentially harmful organotin copounds.

Suitable basic nitrogen or phosphorus compounds are especially imidazoles, pyridines, phosphazene bases, secondary or tertiary amines, hexahydrotriazines, biguanides, guanidines, or amidines.

Nitrogen-containing compounds suitable as catalysts are in particular amines, especially N-ethyl-diisopropylamine, N,N,N',N'-tetramethylalkylenediamines, 1,4-diazabicyclo[2.2.2]octane; amidines such as especially 1,8-diazabicyclo[5.4.0]undec-7-ene (DBU), 1,5-diazabicyclo[4.3.0]non-5-ene (DBN), 6-dibutylamino1,8-diazabicyclo-[5.4.0]undec-7-ene; guanidines such as especially tetramethylguanidine, 2-guanidino-benzimidazole, acetylacetone-guanidine, 3-di-o-tolyl-guanidine, 2-tert-butyl-1,1,3,3-tetramethyl guanidine; and imidazoles, in particular N-(3-trimethoxysilylpropyl)-4,5-dihydroimidazole and N-(3-triethoxysilylpropyl)-4,5-dihydroimidazole.

The moisture-curable composition as claimed in any of claims 1 to 7, characterized in that the curing catalyst for alkoxysilane groups is a metalorganic catalyst, an amine compound, or a mixture thereof.

The composition may comprise further constituents, especially the following auxiliaries and additives:
- adhesion promoters and/or crosslinkers, especially further aminosilanes, mercaptosilanes, epoxysilanes, (meth)acryloylsilanes, anhydridosilanes, carbamatosilanes, alkylsilanes or iminosilanes, oligomeric forms of these silanes, adducts formed from primary aminosilanes with epoxysilanes or (meth)acryloylsilanes or anhydridosilanes, amino-functional alkylsilsesquioxanes, 3-glycidoxypropyltrimethoxysilane, 3-glycidoxypropyltriethoxysilane or 3-ureidopropyltrimethoxysilane, or oligomeric forms of these silanes;
- desiccants or drying agents, especially tetraethoxysilane, vinyltrimethoxysilane, vinyltriethoxysilane or organoalkoxysilanes having a functional group in the α position to the silane group, especially N-(methyldimethoxysilylmethyl)-O-methylcarbamate, (methacryloyloxymethyl)silanes, methoxymethylsilanes, orthoformic esters, calcium oxide or molecular sieves, especially vinyltrimethoxysilane or vinyltriethoxysilane;
- additional plasticizers, especially reactive plasticizers, in the form of monofunctional polysiloxanes or monofunctional organic polymers, i.e. those that are silane-reactive only at one end;
- solvents;
- inorganic or organic fillers, especially natural, ground or precipitated calcium carbonates, optionally coated with fatty acids, especially stearic acid, baryte (heavy spar), talcs, quartz flours, quartz sand, dolomites, wollastonites, kaolins, calcined kaolins, mica (potassium aluminum silicate), molecular sieves, aluminum oxides, aluminum hydroxides, magnesium hydroxide, silicas including finely divided silicas from pyrolysis processes, industrially produced carbon blacks, graphite, metal powders such as aluminum, copper, iron, silver or steel, PVC powder or hollow spheres;
- fibers, especially glass fibers, carbon fibers, metal fibers, ceramic fibers or polymer fibers such as polyamide fibers or polyethylene fibers;
- dyes;
- pigments, especially titanium dioxide or iron oxides;
- rheology modifiers, in particular thickeners or thixotropy additives, especially sheet silicates such as bentonites, derivatives of castor oil, hydrogenated castor oil, polyamides, polyurethanes, urea compounds, fumed silicas, cellulose ethers or hydrophobically modified polyoxyethylenes;
- stabilizers against oxidation, heat, light or UV radiation;
- natural resins, fats or oils such as rosin, shellac, linseed oil, castor oil or soya oil;
- non-reactive polymers that are preferably solid at room temperature such as, in particular, homo- or copolymers of unsaturated monomers, especially from the group comprising ethylene, propylene, butylene, isobutylene, isoprene, vinyl acetate or alkyl (meth)acrylates, especially polyethylenes (PE), polypropylenes (PP), polyisobutylenes, ethylene-vinyl acetate copolymers (EVA) or atactic poly-α-olefins (APAO);
- flame-retardant substances, especially the already mentioned fillers aluminum hydroxide and magnesium hydroxide, or, in particular, organic phosphoric esters such as, in particular, triethyl phosphate, tricresyl phosphate, triphenyl phosphate, diphenyl cresyl phosphate, isodecyl diphenyl phosphate, tris(1,3-dichloro-2-propyl) phosphate, tris(2-chloroethyl) phosphate, tris(2-ethylhexyl) phosphate, tris(chloroisopropyl) phosphate, tris(chloropropyl) phosphate, isopropylated triphenyl phosphate, mono-, bis- or tris(isopropylphenyl) phosphates of different degrees of isopropylation, resorcinol bis(diphenyl phosphate), bisphenol A bis(diphenyl phosphate) or ammonium polyphosphates;
- surface-active substances, especially wetting agents, leveling agents, deaerating agents or defoamers;
- biocides, especially algicides, fungicides or substances that inhibit fungal growth;
and other substances customarily used in curable compositions. It may be advisable to chemically or physically dry certain constituents before mixing them into the composition.

In preferred embodiments of the moisture-curable composition according to the present invention, the composition furthermore comprises plasticizer, filler, thoxotropy additives, stabilizers, and/or pigments.

The composition preferably comprises between 0.5 and 2.5 wt.-%, preferably between 1 and 2 wt.-%, based on the total composition, of at least one desciccant or drying agent, most preferably vinyl trimethoxysilane. This range has the advantage that an optimal storagy stability and skin formation time can be achieved without rendering the product too stiif and/or brittle after curing.

In a preferred embodiment, the composition comprises at least one desiccant and at least one adhesion promoter.

The composition is preferably produced and stored with exclusion of moisture. Typically, it is storage-stable with exclusion of moisture in a suitable package or arrangement, such as, more particularly, a bottle, a canister, a pouch, a bucket, a vat or a cartridge.

The composition may take the form of a one-component or of a multicomponent, especially two-component, composition.

In the present document, "one-component" refers to a composition in which all constituents of the composition are stored in a mixture in the same container and which is curable with moisture.

In the present document, "two-component" refers to a composition in which the constituents of the composition are present in two different components which are stored in separate containers. Only shortly before or during the application of the composition are the two components mixed with one another, whereupon the mixed composition cures, optionally under the action of moisture.

Any second or optionally further components is/are mixed with the first component prior to or on application, especially by means of a static mixer or by means of a dynamic mixer.

The composition is especially applied at ambient temperature, preferably within a temperature range between 0°C and 45°C, especially 5°C to 35°C, and cures under these conditions.

On application, the crosslinking reaction of the silane groups commences, if appropriate under the influence of moisture. Silane groups present can condense with silanol groups present to give siloxane groups (Si-O-Si groups). Silane groups present can also be hydrolyzed on contact with moisture to give silanol groups (Si-OH groups) and form siloxane groups (Si-O-Si groups) through subsequent condensation reactions. As a result of these reactions, the composition ultimately cures. The amidine of the formula (I) or a reaction product thereof accelerates this curing.

If water is required for the curing, this can either come from the air (air humidity), or else the composition can be contacted with a water-containing component, for example by painting, for example with a smoothing agent, or by spraying, or water or a water-containing component can be added to the composition on application, for example in the form of a water-containing or water-releasing liquid or paste. A paste is especially suitable if the composition itself is in the form of a paste.

In the case of curing by means of air humidity, the composition cures from the outside inward, at first forming a skin on the surface of the composition. What is called the "skin time" or "skin formation time" is a measure of the curing rate of the composition. The speed of curing is generally determined by various factors, for example the availability of water (e.g., relative air humidity), temperature, etc.

The composition is suitable for a multitude of uses, especially as a paint, varnish or primer, as a resin for production of fiber composites, as a rigid foam, flexible foam, molding, elastomer, fiber, film or membrane, as a potting compound, sealant, adhesive, covering, coating or paint for construction and industrial applications, for example as a seam seal, cavity seal, electrical insulation compound, spackling compound, joint sealant, weld or crimp seam sealant, assembly adhesive, bodywork adhesive, glazing adhesive, sandwich element adhesive, laminating adhesive, window and façade membrane adhesive, laminate adhesive, packaging adhesive, wood adhesive, parquet adhesive, anchoring adhesive, floor covering, floor coating, balcony coating, roof coating, concrete protection coating, parking garage coating, seal, pipe coating, anticorrosion coating, textile coating, damping element, sealing element or spackling compound.

The composition is particularly suitable as an adhesive and/or sealant, especially for joint sealing and for elastic adhesive bonds in construction and industrial applications, and as elastic coating with crack-bridging properties, especially for protection and/or sealing of, for example, roofs, floors, balconies, parking decks or concrete pipes.

The composition is thus preferably an adhesive or a sealant or a coating.

The composition is most suitable for repair or restoration of painted, varnished and/or lacquered substrates, in particular metals, coated metals, or painted, lacquered and/or varnished metals.

A composition of this kind typically comprises plasticizers, fillers, adhesion promoters and/or crosslinkers and desiccants, and optionally further auxiliaries and additives.

For an application as adhesive or sealant, the composition preferably has a pasty consistency with structurally viscous properties. Such a pasty sealant or adhesive is especially applied to a substrate from standard cartridges which are operated manually, by means of compressed air or with a battery, or from a vat or hobbock by means of a delivery pump or an extruder, optionally by means of an application robot.

For an application as coating, the composition preferably has a liquid consistency at room temperature with self-leveling properties. It may be slightly thixotropic, such that the coating is applicable to sloping to vertical surfaces without flowing away immediately. It is especially applied by means of a roller or brush or by pouring-out and distribution by means, for example, of a roller, a scraper or a notched trowel.

In preferred embodiemtns of the moisture-curable composition, the moisture-curable composition is sprayable. This means the viscosity is so low, that the composition is sprayable. Surprisingly, the use of dimethyl glutarate helps achieving such low viscosities.

On application, the composition is preferably applied to at least one substrate. Suitable substrates are especially
- glass, glass ceramic, concrete, mortar, brick, tile, gypsum and natural rocks such as limestone, granite or marble;
- metals and alloys such as aluminum, iron, steel and nonferrous metals, and also surface-finished metals and alloys such as galvanized or chromed metals or surface coated metals, such as Kynar^{®}- or Duranar^{®}-coated aluminum;
- leather, textiles, paper, wood, woodbase materials bonded with resins, for example phenolic, melamine or epoxy resins, resin-textile composites and further polymer composites;
- plastics such as polyvinyl chloride (rigid and flexible PVC), acrylonitrile-butadiene-styrene copolymers (ABS), polycarbonate (PC), polyamide (PA), polyesters, poly(methyl methacrylate) (PMMA), epoxy resins, polyurethanes (PUR), polyoxymethylene (POM), polyolefins (PO), polyethylene (PE) or polypropylene (PP), ethylene/propylene copolymers (EPM) and ethylene/propylene/diene terpolymers (EPDM), and also fiber-reinforced plastics such as carbon fiber-reinforced plastics (CFP), glass fiber-reinforced plastics (GFP) and sheet molding compounds (SMC), where the plastics may have been surface-treated by means of plasma, corona or flames;
- coated substrates such as powder-coated metals or alloys;
- paints, lacquers or varnishes, especially automotive topcoats.

If required, the substrates can be pretreated prior to the application of the composition, especially by chemical and/or physical cleaning methods or by the application of an adhesion promoter, an adhesion promoter solution or a primer.

In general, it is not required to pre-treat the surfaces prior to application of the composition. The composition shows an excellent adhesion profile on a large variety of unprimed, non-pretreated, and even uncleaned materials.

Another aspect of the present invention is thus a process for repairing a damaged painted, varnished and/or lacquered object, comprising the steps:
a) optionally removing the paint, varnish and/or lacquer of the damaged parts of the object;
b) mechanically repairing or restoring the damaged parts of the object by adhesively bonding, sealing, filling, or coating the damaged parts using a moisture-curable composition according as described above;
c) curing the applied moisture-curable composition by means of air humidity or added water;
d) re-applying paint, varnish and/or lacquer onto the repaired or restored parts of the object and onto the cured composition.

Preferably, said paint, varnish and/or lacquer is re-applied in step d) by spraying.

In preferred embodiments of the process described above, that said damaged painted, varnished and/or lacquered object is the body of a vehicle, in particular an automotive vehicle.

The compositions disclosed herein generally possess excellent mechanical properties, in particular regarding high tensile strength, high elongation at break, and high tear propagation resistance, and medium to high Shore A hardness, low extrusion force and thus easy applicability, alongside with an excellent storage stability when shelved and especially high overpaintability. This makes them especially suitable as general-purpose elastic adhesives, sealants, fillers, and coatings, in particular in repair and restoration processes on painted, lacquered or varnished objects.

It is possible to bond or seal two identical or two different substrates, especially the aforementioned substrates.

After the curing of the composition with water, especially in the form of air humidity, and/or with at least one suitable crosslinker, a cured composition is obtained.

The composition according to the present invention has exceptionally high overpaintability in its curing or cured state, especially with paints, lacquers and/or varnishes that are used as automotive topcoats. Furthermore, it typically has a storage stability of at least 12 months in a unopend container.

Another aspect of the present invention is the use of an adhesive composition as described herein to adhesively bond, coat, or seal substrates.

The use of the composition gives rise to an article which especially has been bonded, sealed, or coated with the composition. The article is especially a built structure, especially a structure built by structural engineering or civil engineering, an industrially manufactured good or a consumable good, especially a window, a domestic appliance or a mode of transport such as, more particularly, an automobile, a bus, a truck, a rail vehicle, a ship, an aircraft or a helicopter; or the article may be an installable component thereof.

Another aspect of the present invention is thus a substrate, adhesively sealed, coated, filled or bonded by an adhesive composition described herein.

### Examples

Adduced hereinafter are working examples which are intended to elucidate the invention described in detail. It will be appreciated that the invention is not restricted to these described working examples.

The term "standard climatic conditions" refers to a temperature of 23±1°C and a relative air humidity of 50±5%.

### Test methods:

**Tensile Strength** and **Elongation at Break** were determined according to DIN EN 53504 (tensile speed: 200 mm / min), on cured films with a thickness of 2 mm after curing for 7 days under standard climatic conditions.

**Tear Propagation Resistance** was determined according to DIN 53515, on films with a layer thickness of 2 mm after curing for 7 days under standard climatic conditions.

For the determination of the **Extrusion Force** the compositions were dispensed into internally coated aluminum cartridges (outer diameter 46.9 mm, inner diameter 46.2 mm, length 215 mm, metric ISO thread M15×1.5 mm) and given an airtight seal with a polyethylene stopper (diameter 46.1 mm) from Novelis Germany GmbH. After conditioning at 23°C for 24 hours (or 14d 60°C heat ageing and acclimatization fo 4h at 23°C), the cartridges were opened and the contents extruded using an extrusion device. For this purpose, a nozzle with a 2 mm inside-diameter opening was screwed onto the cartridge thread. Using an extrusion device (Zwick/Roell Z005), a determination was made of the force needed to extrude the composition at an extrusion rate of 60 mm/min. The figure reported is an average value of the forces measured after an extrusion distance of 22 mm, 24 mm, 26 mm, and 28 mm. After an extrusion distance of 30 mm, measurement was halted.

**Shore A Hardness** was determined according to DIN 53505 using test specimens with a layer thickness of 6 mm after curing for 7 days under standard climatic conditions.

To determine the skin formation time (time to tack-free surface, **"Tack-free time"),** a small portion of the adhesive composition to be tested (stored prior to testing during 24 hours at 23 °C or 7d at 60°C in closed container to simulate ageing, and subsequent acclimatization during 4h at 23°C), was applied in a layer thickness of 3 mm on cardboard and at 23 ° C and 50% rel. humidity to determine the time that it took for a slight tap on the curing adhesive's surface by means of a pipette made of LDPE while measuring the time. The tack-free time is the first time no residue of adhesive is left on the pipette.

**Paintability** using the grid test was done using the following procedure: An aluminium plate was thoroughly cleaned with heptane and pretreated with Sika^{®}Aktivator-205 (Sika Schweiz) to ensure proper adhesion of all compositions thereon during the test protocol. Wooden spacers (thickness 3.5 mm) were laid onto the aluminium sheet and between these spacers, the compositions were applied onto the aluminium surface. Excess compositition was removed using a spatula, thus creating a 3.5 mm flat and smooth layer of fresh composition on the aluminum plate. After 24 h of curing at 23 °C and 50% r.h., the respective automotive paint was sprayed onto the cured composition according to the application specifications of the respective paint. After drying of the paint, a clear coat (according to the paint manufacturer's specifications) was applied thereon by spraying. The whole layered paint including clear coat was then thoroughly dried in an oven at 60°C during 40 min.

After this, a cross-cut procedure was initiated on the paint covering the cured composition. This was done by cutting 6 cuts horizontally and 6 cuts vertically through the paint using a thin knife with a line distance between the cuts of 1 mm. This created a grid of 6x6 lines with 90° cross angles. This procedure was done in accordance with ISO 2409 (2007) for paint layers of 61 to 120 micrometer thickness. Afterwards the pressure sensitive tape was pressed with force onto the cut area. Within 5 minutes of applying the tape it was removed by grasping the free end and pulling it off fast at an angle of about 45-60°.

The adhesion of the paint to the sealant bead was evaluated exactly as described in ISO 2409 (2007):
GT0: The edges of the cuts are completely smooth; none of the squares of the lattice is detached.
GT1: Detachment of small flakes of the coating at the intersections of the cuts. A cross-cut area not greater than 5 % is affected.
GT2: The coating has flaked along the edges and/or at the intersections of the cuts. A cross-cut area greater than 5 %, but not greater than 15 %, is affected.
GT3: The coating has flaked along the edges of the cuts partly or wholly in large ribbons, and/or it has flaked partly or wholly on different parts of the squares. A cross-cut area greater than 15 %, but not greater than 35 %, is affected.
GT4: The coating has flaked along the edges of the cuts in large ribbons and/or some squares have detached partly or wholly. A cross-cut area greater than 35 %, but not greater than 65 %, is affected.
GT5: Any degree of flaking that cannot even be classified by classification GT4. The results of this measurement is shown in Tables 4 and 5 in % adhesion, meaning a classification GT0 is shown as 100 %. A numerical value of 85 % in Table 4 or 5, for example, corresponds to a classification GT2.

**Table 1: Compounds used for the example compositions.**

| **Name** | **Description, trade name** |
|---|---|
| Polymer STP (Polymer **P)** | Polymer having silane groups; preparation detailed below |
| DIDP (plasticizer) | Diisodecyl phthalate (Jayflex^{®} DIDP, ExxonMobil) |
| DINCH (plasticizer) | 1,2-Cyclohexane dicarboxylic acid diisononyl ester (Hexamoll^{®} DINCH, BASF) |
| Thixotropy additive | Preparation see below |
| Solusolv (plasticizer) | Triethyleneglycol bis(2-ethylhexanoate) (Solusolv^{®} 2075, Eastman Chemical) |
| DMG | Mixture of dimethyl succinate, dimethyl glutarate and dimethyl adipate, containing ≥99 wt.-% dimethyl glutarate (Estasol^{®} DMG, Chemoxy) |
| DBE | Dibasic ester mixture (19-30 wt-% dimethyl succinate, 50-75 wt.-% dimethyl glutarate, 10-25 wt.-% dimethyl adipate (Sigma Aldrich) |
| Coasol | Dibasic ester mixture (15-30 wt-% diisobutyl succinate, 55-70 wt.-% diisobutyl glutarate, 8-25 wt.-% diisobutyl adipate (Coasol^{®}, Prochem AG) |
| DMA | ≥99 wt.-% dimethyl adipate (Sigma Aldrich) |
| DMS | ≥99 wt.-% dimethyl succinate (Sigma Aldrich) |
| DGDS | Decaglycerol decastearate (CAS: 39529-26-5) (Prochem AG) |
| VTMO | Vinyl trimethoxysilane (Dynasylan^{®} VTMO, Evonik) |
| Organosilane 1 | N-(2-aminoethyl)-3-aminopropyltrimethoxysilane (Silquest^{®} A-1120, Momentive) |
| Organosilane 2 | N-(2-aminoethyl)-3-aminopropyl-methyldimethoxysilane (Dynasylan^{®} 1411, Evonik) |
| Organosilane **OS**1 | N-(n-Butyl)-3-aminopropyltrimethoxysilane (Dynasylan^{®} 1189, Evonik) |
| Organosilane **OS**2 | Octyltrimethoxysilane (Dynasylan^{®} OCTMO, Evonik) |
| GCC (Filler) | Natural ground limestone (Omyacarb^{®} 5 GU, Omya) |
| Sn catalyst | Dibutyltin dilaurate (9.5 wt.-% in plasticizer DIDP) |

### Preparation of a polymer P containing reactive silane groups:

**Polymer STP:** With exclusion of moisture, 1000 g of Acclaim^{®} 12200 polyol (polyoxy-propylenediol having a low level of unsaturation, from Covestro; OH number 11.0 mg KOH/g), 43.6 g of isophorone diisocyanate (IPDI; Vestanat^{®} IPDI, from Evonik), 126.4 g of diisodecyl phthalate (DIDP) and 0.12 g dibutyl tin dilaurate (DBTDL) were heated up to 90°C while stirring constantly and left at this temperature until the content of free isocyanate groups determined by titrimetry had reached a stable value of 0.63% by weight. Subsequently, 63.0 g of diethyl N-(3-trimethoxysilylpropyl)-aminosuccinate (adduct formed from 3-aminopropyltrimethoxysilane and diethyl maleate; prepared according to the details in US 5,364,955) were mixed in and the mixture was stirred at 90°C until it was no longer possible to detect any free isocyanate by means of FT-IR spectroscopy. The polyether containing trimethoxysilane groups thus obtained, having a silane equivalent weight of about 6880 g/eq (calculated from the amounts used), was cooled down to room temperature and stored with exclusion of moisture.

### Preparation of the thixotropy additive:

A vacuum mixer was initially charged with 1000 g of diisodecyl phthalate (Palatinol^{®} Z, BASF SE, Germany) and 160 g of diphenylmethane 4,4'-diisocyanate (Desmodur^{®} 44 MC L, Bayer MaterialScience AG, Germany), and heated gently. Then 90 g of monobutylamine were gradually added dropwise while stirring vigorously. Stirring of the resulting white paste continued under reduced pressure while cooling for a further hour. The thus obtained thixotropy additive contains 20% by weight of thixotropic agent in 80% by weight of diisodecyl phthalate and was used withour further processing in the formulations.

### Compositions based on polymers containing reactive silane groups:

Comparative examples (not according to the present invention) are identified in tables 2 to 9 by "(Ref.)". Compounds used are specified in table 1.

### Compositions C1 to C17:

A series of example compositions was prepared by mixing the ingredients shown in Tables 2, 3, 8 and 8 under nitrogen atmosphere in a vacuum mixer. First, the polymer **P,** the plasticizers and dialkyl esters (e.g., DMG, where applicable), the thixotropy additive, and VTMO (where applicable) were thoroughly mixed for 5 minutes. Subsequently, the dried fillers were added with kneading during 15 minutes at 60°C. With the heater switched off, silanes **OS** (where applicable) and further silanes and catalysts were added and the compostions were subsequently processed to a homogeneous paste during 10 minutes under vacuum. Said paste was subsequently filled into internally coated aluminum spreading piston cartridges that were closed airtight and stored under standard climate conditions for at least 24 h until the testing protocol was employed.

**Table 2: Example compositions (all numbers in wt.-%, based on the total individual composition).**

| **Composition** | **C1** (Ref.) | **C2** | **C3** | **C4** |
|---|---|---|---|---|
| Polymer STP (Polymer **P)** | 25 | 25 | 25 | 25 |
| DIDP (plasticizer) | 8.5 | 3.5 | 3.5 | 7.5 |
| Solusolv (plasticizer) | 4 | 4 | 4 | - |
| DMG | - | 5 | 5 | 5 |
| VTMO | 1.5 | 1.5 | 1.5 | 1.5 |
| Thixotropy additive | 6 | 6 | 6 | 6 |
| GCC (Filler) | 52 | 52 | 52 | 52 |
| Organosilane 1 | 1 | 1 | 1 | 1 |
| Organosilane 2 | 0.5 | 0.5 | - | - |
| Organosilane **OS**1 | - | - | 0.5 | 0.5 |
| Sn catalyst | 1.5 | 1.5 | 1.5 | 1.5 |

**Table 3: Example compositions (all numbers in wt.-%, based on the total individual composition).**

| **Composition** | **C5** (Ref.) | **C6** | **C7** (Ref.) | **C8** |
|---|---|---|---|---|
| Polymer STP (Polymer **P)** | 25 | 25 | 25 | 25 |
| DIDP (plasticizer) | 8.5 | 3.5 | 8.5 | 3.5 |
| Solusolv (plasticizer) | 4 | 4 | 4 | 4 |
| DMG | - | 5 | - | 5 |
| VTMO | 1.5 | 1.5 | 1.5 | 1.5 |
| Thixotropy additive | 6 | 6 | 6 | 6 |
| GCC (Filler) | 52 | 52 | 52 | 52 |
| Organosilane 1 | 1.5 | 1.5 | 1 | 1 |
| Organosilane **OS**2 | - | - | 0.5 | 0.5 |
| Sn catalyst | 1.5 | 1.5 | 1.5 | 1.5 |

The results clearly show that the inventive compositions show significantly improved overpaintability with all automotive paints tested. The mechanical performance of the inventive compositions is not affected by the inventive compositional adjustments. Furthermore, the extrusion force is significantly lower for the inventive examples compared to the reference examples, which is an advantage for easy application and sprayability of the compositions.

The test results are shown in Tables 4 and 5:

**Table 4: Testing results of the investigated samples. "n/m" means "not measured".**

| **Test results** | **C1** (Ref.) | **C2** | **C3** | **C4** |
|---|---|---|---|---|
| Tensile strength [MPa] | 2.1 | 2.0 | 2.2 | 2.1 |
| Elongation at break [%] | 161 | 143 | 201 | 186 |
| Tear Propag. Resistance [N/mm] | 2.7 | 2.5 | 3.0 | 3.1 |
| Extrusion force (2mm n.) 1d 23°C [N] | 490 | 336 | 325 | 352 |
| Shore A Hardness | 43 | 46 | 41 | 41 |
| Paintability (grid cut test) [%] | *Paints detailed on left side (first column)* | | | |
| *Cromax Pro (water-based)* | 81 | 100 | 100 | 100 |
| *Mipa WBC (water-based)* | 73 | 93 | 100 | 100 |
| *Spies Hecker WB (water-based)* | 42 | n/m | 100 | 100 |
| *Standox SprayMax 1K (solvent-based)* | 63 | 98 | n/m | n/m |
| *Spies Hecker 2K (2-component)* | 47 | 99 | n/m | n/m |
| *Retan WB Eco 400 (water-based)* | n/m | n/m | 100 | 100 |

**Table 5: Testing results of the investigated samples.**

| **Test results** | **C5** (Ref.) | **C6** | **C7** (Ref.) | **C8** |
|---|---|---|---|---|
| Tensile strength [MPa] | 2.9 | 2.2 | 2.2 | 2.1 |
| Elongation at break [%] | 165 | 152 | 192 | 182 |
| Tear Propag. Resistance [N/mm] | 2.4 | 2.7 | 3.0 | 2.9 |
| Extrusion force (2mm n.) [N] 1d 23°C | 415 | 364 | 461 | 321 |
| Shore A Hardness | 45 | 46 | 40 | 42 |
| Paintability (grid cut test) [%] | *Paints detailed on left side (first column)* | | | |
| *Cromax Pro (water-based)* | 76 | 100 | 100 | 100 |
| *Mipa WBC (water-based)* | 75 | 99 | 75 | 100 |
| *Spies Hecker WB (water-based)* | 55 | 98 | 85 | 100 |
| *Retan WB Eco 400 (water-based)* | n/m | 100 | 34 | 100 |

Additional experiments were done to study the influence of different esters of carboxylic acids. These compositions **C9** to **C12** are shown in Table 6. The results of some measurments of these example compositions are shown in Table 7.

Table 7 shows that diisobutyl esters of aliphatic C3 to C5 dicarboxylic acids (Experiment **C10)** shows severe deactivation of the curing mechanism after heat storage in closed container (ageing simulation). This is observable in the massively prolonged tack-free time after heat storage. A different ester not according to the present invention (Experiment **C11)** shows a far too high extrusion force, which is even more prominent after heat storage.

**Table 6: Example compositions (all numbers in wt.-%, based on the total individual composition).**

| **Composition** | **C9** | **C10** (Ref.) | **C11** (Ref.) | **C12** (Ref.) |
|---|---|---|---|---|
| Polymer STP (Polymer **P)** | 25 | 25 | 25 | 25 |
| DINCH (plasticizer) | 7.7 | 7.7 | 12.7 | 7.7 |
| Solusolv (plasticizer) | 4 | 4 | 4 | 4 |
| DMG | 5 | - | - | - |
| DBE | - | - | - | 5 |
| Coasol | - | 5 | - | - |
| DGDS | - | - | 5 | - |
| VTMO | 1.5 | 1.5 | 1.5 | 1.5 |
| Thixotropy additive | 16.4 | 16.4 | 16.4 | 16.4 |
| GCC (Filler) | 37.1 | 37.1 | 32.1 | 37.1 |
| Organosilane 1 | 1 | 1 | 1 | 1 |
| Organosilane 2 | 0.5 | 0.5 | 0.5 | 0.5 |
| Sn catalyst | 1.8 | 1.8 | 1.8 | 1.8 |

**Table 7: Testing results of the investigated samples.**

| **Test results** | **C9** | **C10** (Ref.) | **C11** (Ref.) | **C12** (Ref.) |
|---|---|---|---|---|
| Tensile strength [MPa] | 1.2 | 1.2 | 0.5 | 1.0 |
| Elongation at break [%] | 230 | 266 | 290 | 257 |
| Tear Propag. Resistance [N/mm] | 2.1 | 2.2 | 2.4 | 2.2 |
| Extrusion force (2mm nozzle) [N] 1d 23°C | 292 | 208 | 548 | 270 |
| Extrusion force (2mm nozzle) [N] 14d 60°C + 4h 23°C | 385 | 256 | 900 | 423 |
| Tack-free time [min] 1d 23°C | 15 | 23 | 41 | 22 |
| Tack-free time [min] 7d 60°C + 4h 23°C | 20 | 180 | 18 | 23 |
| Shore A Hardness | 24 | 23 | 17 | 42 |

Tables 8 and 9 show additional experiments to further study the influence of different dimethyl esters of dicarboxylic acids and their mixtures. These compositions **C13** to **C17** are shown in Table 8.

The results of some measurments of these example compositions are shown in Table 9.

Table 9 shows that with increasing amount of dimethyl glutarate (relative to dimethyl adipate) the tensile strength as well as the elongation at break increases and the extrusion force decreases. Tack-free time, Shore A, and overpaitability are not influenced significantly. Experiment C17 with dimethyl succinate shows a lower elongation and a slightly higher extrusion force compared to samples that contain significant amounts of dimethyl glutarate.

**Table 8: Example compositions (all numbers in wt.-%, based on the total individual composition).**

| **Composition** | **C13** | **C14** | **C15** | **C16** | **C17** (Ref.) |
|---|---|---|---|---|---|
| Polymer STP (Polymer **P)** | 25 | 25 | 25 | 25 | 25 |
| DINCH (plasticizer) | 3.5 | 3.5 | 3.5 | 3.5 | 3.5 |
| Solusolv (plasticizer) | 4 | 4 | 4 | 4 | 4 |
| DMG | 1 | 2.5 | 4 | 5 | - |
| DMA | 4 | 2.5 | 1 | - | - |
| DMS | - | - | - | - | 5 |
| VTMO | 1.5 | 1.5 | 1.5 | 1.5 | 1.5 |
| Thixotropy additive | 6.0 | 6.0 | 6.0 | 6.0 | 6.0 |
| GCC (Filler) | 52.0 | 52.0 | 52.0 | 52.0 | 52.0 |
| Organosilane 1 | 1 | 1 | 1 | 1 | 1 |
| Organosilane 2 | 0.5 | 0.5 | 0.5 | 0.5 | 0.5 |
| Sn catalyst | 1.5 | 1.5 | 1.5 | 1.5 | 1.5 |

**Table 9: Testing results of the investigated samples.**

| **Test results** | **C13** | **C14** | **C15** | **C16** | **C17** (Ref.) |
|---|---|---|---|---|---|
| Tensile strength [MPa] | 2.41 | 2.68 | 2.71 | 2.72 | 2.71 |
| Elongation at break [%] | 190 | 195 | 196 | 200 | 188 |
| Extrusion force (2mm nozzle) [N] 1d 23°C | 406 | 393 | 350 | 352 | 384 |
| Tack-free time [min] 1d 23°C | 28 | 25 | 23 | 25 | 26 |
| Tack-free time [min] 7d 60°C + 4h 23°C | 20 | 20 | 20 | 20 | 20 |
| Shore A Hardness | 40 | 41 | 43 | 43 | 43 |
| Paintability (grid cut test) [%] | *Paint detailed on left side (first column)* | | | | |
| *Standox (water-based)* | 100 | 100 | 100 | 100 | 100 |

## Claims

1. A moisture-curable composition, comprising
- at least one organic polymer **P** containing reactive silane groups;
- between 1.0 wt.-% and 25.0 wt.-%, preferably between 2.0 wt.-% and 20 wt.-%, in particular between 2.5 wt.-% and 10 wt.-%, based on the total composition, of dimethyl or diethyl esters of aliphatic C3 to C5 dicarboxylic acids; and
- at least one curing catalyst for alkoxysilane groups,
**characterized in that** the dimethyl or diethyl esters of aliphatic C3 to C5 dicarboxylic acids comprise at least 90 wt.-% of dimethyl glutarate, based in the total amount of esters of aliphatic C3 to C5 dicarboxylic acids contained in the composition.

2. The moisture-curable composition as claimed in claim 1, **characterized in that** the organic polymer **P** containing reactive silane groups is a a polyurethane, polyolefin, polyester, polycarbonate, polyamide, poly(meth)acrylate or polyether or a mixed form of these polymers.

3. The moisture-curable composition as claimed in any of claims 1 or 2, **characterized in that** the composition furthermore contains between 0.1 wt.-% and 5 wt.-%, preferably between 0.25 wt.-% and 2.5 wt.-%, based on the total compositions, of an organosilane **OS** of formula (I),
R^{a}-Si(OCH₃)₃ (I)
wherein
R^{a} is an aliphatic, cycloyliphatic or aromatic C4 to C12 alkyl residue that optionally contains ether oxygen oder secondary amino groups.

4. The moisture-curable composition as claimed in claim 3, **characterized in that** said organosilane **OS** is N-(n-butyl)-3-aminopropyltrimethoxysilane, octyltrimethoxysilane, phenyltrimethoxysilane or any mixture of these silanes.

5. The moisture-curable composition as claimed in any of claims 3 or 4, **characterized in that** the composition comprises between 2.5 wt.-% and 10 wt.-% of dimethyl glutarate, and between 0.25 wt.-% and 2.5 wt.-% of said organosilane **OS.**

6. The moisture-curable composition as claimed in any of claims 1 to 5, **characterized in that** the composition furthermore comprises between 0.5 and 2.5 wt.-%, based on the total composition, of organosilanes that are not according to formula (I) in claim 3.

7. The moisture-curable composition as claimed in any of claims 1 to 6, **characterized in that** the composition furthermore comprises at least one further additive, selected from the list consisting of plasticizers and diuents, fillers, thixotropy additives, stabilizers, drying agents, and pigments.

8. The moisture-curable composition as claimed in any of claims 1 to 7, **characterized in that** the curing catalyst for alkoxysilane groups is a metalorganic catalyst, an amine compound, or a mixture thereof.

9. The moisture-curable composition as claimed in any of claims 1 to 8, **characterized in that** the dimethyl or diethyl esters of aliphatic C3 to C5 dicarboxylic acids comprise at least 95 wt.-% of dimethyl glutarate, based in the total amount of esters of aliphatic C3 to C5 dicarboxylic acids contained in the composition.

10. The moisture-curable composition as claimed in any of claims 1 to 9, **characterized in that** said organic polymer **P** is comprised in the composition with an amount of between 10 wt.-% and 60 wt.-%, based on the total composition.

11. The moisture-curable composition as claimed in any of claims 1 to 10, **characterized in that** the moisture-curable composition is sprayable.

12. A process for repairing a damaged painted, varnished and/or lacquered object, comprising the steps:
a) optionally removing the paint, varnish and/or lacquer of the damaged parts of the object;
b) mechanically repairing or restoring the damaged parts of the object by adhesively bonding, sealing, filling, or coating the damaged parts using a moisture-curable composition according to any of claims 1 to 11;
c) curing the applied moisture-curable composition by means of air humidity or added water;
d) re-applying paint, varnish and/or lacquer onto the repaired or restored parts of the object and onto the cured composition.

13. The process as claimed in claim 12, **characterized in that** said paint, varnish and/or lacquer is re-applied in step d) by spraying.

14. The process as claimed in claim 12 or 13, **characterized in that** said damaged painted, varnished and/or lacquered object is the body of a vehicle, in particular an automotive vehicle.

15. Use of a moisture-curable composition according to any of claims 1 to 11 to adhesively bond, coat, fill, or seal substrates.

## Patentansprüche

1. Feuchtigkeitshärtbare Zusammensetzung umfassend
- wenigstens ein organisches Polymer P, das reaktive Silangruppen enthält;
- zwischen 1,0 Gew.-% und 25,0 Gew.-%, vorzugsweise zwischen 2,0 Gew.-% und 20 Gew.-%, insbesondere zwischen 2,5 Gew.-% und 10 Gew.-%, bezogen auf die Gesamtzusammensetzung, an Dimethyl- oder Diethylestern aliphatischer C3- bis C5-Dicarbonsäuren; und
- wenigstens einen Härtungskatalysator für Alkoxysilangruppen,
**dadurch gekennzeichnet, dass** die Dimethyl- oder Diethylester aliphatischer C3- bis C5-Dicarbonsäuren wenigstens 90 Gew.-% Dimethylglutarat, bezogen auf die Gesamtmenge der in der Zusammensetzung enthaltenen Ester aliphatischer C3- bis C5-Dicarbonsäuren, enthalten.

2. Feuchtigkeitshärtbare Zusammensetzung nach Anspruch 1, **dadurch gekennzeichnet, dass** das organische Polymer P, das reaktive Silangruppen enthält, ein Polyurethan, Polyolefin, Polyester, Polycarbonat, Polyamid, Poly(meth)acrylat oder Polyether oder eine Mischform dieser Polymere ist.

3. Feuchtigkeitshärtbare Zusammensetzung nach einem der Ansprüche 1 oder 2, **dadurch gekennzeichnet, dass** die Zusammensetzung ferner zwischen 0,1 Gew.-% und 5 Gew.-%, vorzugsweise zwischen 0,25 Gew.-% und 2,5 Gew.-%, bezogen auf die Gesamtzusammensetzungen, an einem Organosilan OS der Formel (I) enthält,
R^{a}-Si(OCH₃)₃ (I)
wobei
R^{a} ein aliphatischer, cycloyliphatischer oder aromatischer C4- bis C12-Alkylrest, der gegebenenfalls Ethersauerstoff oder sekundäre Aminogruppen enthält, ist.

4. Feuchtigkeitshärtbare Zusammensetzung nach Anspruch 3, **dadurch gekennzeichnet, dass** das Organosilan OS N-(n-Butyl)-3-aminopropyltrimethoxysilan, Octyltrimethoxysilan, Phenyltrimethoxysilan oder ein beliebiges Gemisch dieser Silane ist.

5. Feuchtigkeitshärtbare Zusammensetzung nach einem der Ansprüche 3 oder 4, **dadurch gekennzeichnet, dass** die Zusammensetzung zwischen 2,5 Gew.-% und 10 Gew.-% Dimethylglutarat und zwischen 0,25 Gew.-% und 2,5 Gew.-% an dem Organosilan OS enthält.

6. Feuchtigkeitshärtbare Zusammensetzung nach einem der Ansprüche 1 bis 5, **dadurch gekennzeichnet, dass** die Zusammensetzung ferner zwischen 0,5 und 2,5 Gew.-%, bezogen auf die Gesamtzusammensetzung, an Organosilanen, die nicht Formel (I) in Anspruch 3 entsprechen, enthält.

7. Feuchtigkeitshärtbare Zusammensetzung nach einem der Ansprüche 1 bis 6, **dadurch gekennzeichnet, dass** die Zusammensetzung ferner wenigstens einen weiteren Zusatzstoff ausgewählt aus der Liste bestehend aus Weichmachern und Verdünnungsmitteln, Füllstoffen, Thixotropie-Zusatzstoffen, Stabilisatoren, Trocknungsmitteln und Pigmenten umfasst.

8. Feuchtigkeitshärtbare Zusammensetzung nach einem der Ansprüche 1 bis 7, **dadurch gekennzeichnet, dass** der Härtungskatalysator für Alkoxysilangruppen ein metallorganischer Katalysator, eine Aminverbindung oder ein Gemisch davon ist.

9. Feuchtigkeitshärtbare Zusammensetzung nach einem der Ansprüche 1 bis 8, **dadurch gekennzeichnet, dass** die Dimethyl- oder Diethylester aliphatischer C3- bis C5-Dicarbonsäuren wenigstens 95 Gew.-% Dimethylglutarat, bezogen auf die Gesamtmenge der in der Zusammensetzung enthaltenen Ester aliphatischer C3- bis C5-Dicarbonsäuren, umfassen.

10. Feuchtigkeitshärtbare Zusammensetzung nach einem der Ansprüche 1 bis 9, **dadurch gekennzeichnet, dass** das organische Polymer P in der Zusammensetzung in einer Menge von zwischen 10 Gew.-% und 60 Gew.-%, bezogen auf die Gesamtzusammensetzung, enthalten ist.

11. Feuchtigkeitshärtbare Zusammensetzung nach einem der Ansprüche 1 bis 10, **dadurch gekennzeichnet, dass** die feuchtigkeitshärtbare Zusammensetzung sprühbar ist.

12. Verfahren zum Reparieren eines beschädigten bemalten, lasierten und/oder lackierten Gegenstands, umfassend die Schritte:
a) gegebenenfalls Entfernen des Anstrichs, der Lasur und/oder des Lacks der beschädigten Teile des Gegenstands;
b) mechanisches Reparieren oder Wiederherstellen der beschädigten Teile des Gegenstands durch Verkleben, Versiegeln, Füllen oder Beschichten der beschädigten Teile unter Verwendung einer feuchtigkeitshärtbaren Zusammensetzung nach einem der Ansprüche 1 bis 11;
c) Härten der aufgebrachten feuchtigkeitshärtbaren Zusammensetzung durch Luftfeuchtigkeit oder zugegebenes Wasser;
d) Wiederaufbringen von Anstrich, Lasur und/oder Lack auf die reparierten oder wiederhergestellten Teile des Gegenstandes und auf die gehärtete Zusammensetzung.

13. Verfahren nach Anspruch 12, **dadurch gekennzeichnet, dass** der Anstrich, die Lasur und/oder der Lack bei Schritt d) durch Sprühen wiederaufgebracht wird.

14. Verfahren nach Anspruch 12 oder 13, **dadurch gekennzeichnet, dass** der beschädigte bemalte, lasierte und/oder lackierte Gegenstand die Karosserie eines Fahrzeugs, insbesondere eines Kraftfahrzeugs, ist.

15. Verwendung einer feuchtigkeitshärtbaren Zusammensetzung nach einem der Ansprüche 1 bis 11 zum Verkleben, Beschichten, Füllen oder Versiegeln von Substraten.

## Revendications

1. Composition durcissable à l'humidité, comprenant
- au moins un polymère organique P contenant des groupes silanes réactifs ;
- entre 1,0 % en poids et 25,0 % en poids, de préférence entre 2,0 % en poids et 20 % en poids, en particulier entre 2,5 % en poids et 10 % en poids, par rapport à la composition totale, d'esters diméthyliques ou diéthyliques d'acides dicarboxyliques aliphatiques en C3 à C5 ; et
- au moins un catalyseur de durcissement pour des groupes alcoxysilane,
**caractérisée en ce que** les esters diméthyliques ou diéthyliques d'acides dicarboxyliques aliphatiques en C3 à C5 comprennent au moins 90 % en poids de glutarate de diméthyle, par rapport à la quantité totale d'esters d'acides dicarboxyliques aliphatiques en C3 à C5 contenus dans la composition.

2. Composition durcissable à l'humidité selon la revendication 1, **caractérisée en ce que** le polymère organique P contenant des groupes silanes réactifs est un polyuréthane, une polyoléfine, un polyester, un polycarbonate, un polyamide, un poly(méth)acrylate ou un polyéther ou une forme mixte de ces polymères.

3. Composition durcissable à l'humidité selon l'une quelconque des revendications 1 ou 2, **caractérisée en ce que** la composition contient en outre entre 0,1 % en poids et 5 % en poids, de préférence entre 0,25 % en poids et 2,5 % en poids, par rapport aux compositions totales, d'un organosilane OS de formule (I),
R^{a}-Si(OCH₃)₃ (I)
dans laquelle
R^{a} est un radical alkyle aliphatique, cycloaliphatique ou aromatique en C4 à C12 qui contient éventuellement un oxygène d'éther ou des groupes amino secondaire.

4. Composition durcissable à l'humidité selon la revendication 3, **caractérisée en ce que** ledit organosilane OS est le N-(n-butyl)-3-aminopropyltriméthoxysilane, l'octyltriméthoxysilane, le phényltriméthoxysilane ou un mélange quelconque de ces silanes.

5. Composition durcissable à l'humidité selon l'une quelconque des revendications 3 ou 4, **caractérisée en ce que** la composition comprend entre 2,5 % en poids et 10 % en poids de glutarate de diméthyle, et entre 0,25 % en poids et 2,5 % en poids dudit organosilane OS.

6. Composition durcissable à l'humidité selon l'une quelconque des revendications 1 à 5, **caractérisée en ce que** la composition comprend en outre entre 0,5 et 2,5 % en poids, par rapport à la composition totale, d'organosilanes qui ne répondent pas à la formule (I) de la revendication 3.

7. Composition durcissable à l'humidité selon l'une quelconque des revendications 1 à 6, **caractérisée en ce que** la composition comprend en outre au moins un autre additif choisi dans la liste constituée par les plastifiants et les diluants, les charges, les additifs thixotropes, les stabilisants, les agents de séchage, et les pigments.

8. Composition durcissable à l'humidité selon l'une quelconque des revendications 1 à 7, **caractérisée en ce que** le catalyseur de durcissement pour groupes alcoxysilane est un catalyseur organométallique, un composé d'amine ou un mélange de ceux-ci.

9. Composition durcissable à l'humidité selon l'une quelconque des revendications 1 à 8, **caractérisée en ce que** les esters diméthyliques ou diéthyliques d'acides dicarboxyliques aliphatiques en C3 à C5 comprennent au moins 95 % en poids de glutarate de diméthyle, par rapport à la quantité totale d'esters d'acides dicarboxyliques aliphatiques en C3 à C5 contenus dans la composition.

10. Composition durcissable à l'humidité selon l'une quelconque des revendications 1 à 9, **caractérisée en ce que** ledit polymère organique P est compris dans la composition en une quantité comprise entre 10 % en poids et 60 % en poids, par rapport à la composition totale.

11. Composition durcissable à l'humidité selon l'une quelconque des revendications 1 à 10, **caractérisée en ce que** la composition durcissable à l'humidité est pulvérisable.

12. Procédé de réparation d'un objet endommagé peint, verni et/ou laqué, comprenant les étapes :
a) éventuellement élimination de la peinture, du vernis et/ou de la laque des parties endommagées de l'objet ;
b) réparation ou restauration mécanique des parties endommagées de l'objet par liaison de manière adhésive, scellement, remplissage ou revêtement des parties endommagées en utilisant une composition durcissable à l'humidité selon l'une quelconque des revendications 1 à 11 ;
c) durcissement de la composition durcissable à l'humidité appliquée au moyen de l'humidité de l'air ou d'eau ajoutée ;
d) ré-application de peinture, de vernis et/ou de laque sur les parties réparées ou restaurées de l'objet et sur la composition durcie.

13. Procédé selon la revendication 12, **caractérisé en ce que** ladite peinture, ledit vernis et/ou ladite laque est ré-appliqué(e) à l'étape d) par pulvérisation.

14. Procédé selon la revendication 12 ou 13, **caractérisé en ce que** ledit objet endommagé peint, verni et/ou laqué est la carrosserie d'un véhicule, en particulier un véhicule automobile.

15. Utilisation d'une composition durcissable à l'humidité selon l'une quelconque des revendications 1 à 11 pour lier de manière adhésive, revêtir, remplir ou sceller des substrats.
